# EUROPÄISCHE PATENTSCHRIFT

(11) **EP 1 328 332 B1**
(45) Veröffentlichungstag und Bekanntmachung des Hinweises auf die Patenterteilung: **28.07.2004**
(21) Anmeldenummer: 01969077.5
(22) Anmeldetag: 02.10.2001
(51) Int. Cl.: B01D 53/84, B01D 47/06

(54) **ANLAGE ZUR REINIGUNG VON ABGASEN**
EXHAUST GAS PURIFICATION SYSTEM
INSTALLATION D'EPURATION DE REJETS GAZEUX

(30) Priorität: 03.10.2000 AT 20001679; 19.04.2001 AT 2001635
(43) Veröffentlichungstag der Anmeldung: 23.07.2003
(73) Patentinhaber: Scheuch GmbH, 4971 Aurolzmünster (AT)
(72) Erfinder: PRÖLL, Friedrich, A-4906 Eberschwang (AT); LISBERGER, Manfred, A-4752 Riedau (AT)
(74) Vertreter: Heger, Georg, Dipl.-Ing., Dr.
(86) Internationale Anmeldenummer: PCT/AT2001/000310
(87) Internationale Veröffentlichungsnummer: WO 2002/028515

(56) Entgegenhaltungen:
- EP-A- 0 074 100
- DE-A- 19 903 215
- US-A- 4 781 732
- US-A- 5 236 677
- US-A- 6 019 817

## Beschreibung

Die Erfindung betrifft eine Anlage zur Reinigung von mit Staub, mit Aerosolen und mit flüchtigen organischen Kohlenstoffverbindungen belasteten Abgasen, insbesondere Abgasen von Trocknungsanlagen für biogene Rohstoffe, mit zumindest zwei hintereinander angeordneten Filterstufen, umfassend zumindest eine als Sprühwäscher oder Nasselektrofilter unter Verwendung von Waschwasser ausgebildete Filterstufe zur Reinigung der Abgase von partikelförmigen und aerosolhältigen Inhaltsstoffen und zumindest einer Filterstufe zur Reinigung der Abgase von organischen Verbindungen, Aerosolen sowie weiteren geruchsintensiven Substanzen mittels Mikroorganismen, welche Filterstufe als biologischer Filter ausgeführt ist, mit einer Stoffaustauschzone, in welcher durch Verdüsung von Waschwasser der Übergang der Abgase von der Gasphase in die Flüssigphase erfolgt.

Unter den Begriff "Abgase" fallen sowohl von Verbrennungsprozessen herrührende Gase als auch Abluftströme, welchen keine Verbrennung vorausgegangen ist.

Obgleich das beschriebene Verfahren bzw. die Anlage, insbesondere zur Reinigung von Abgasen aus Trocknungsanlagen für organische Naturstoffe wie Holz, Grünschnitt oder Kompost aber auch Austrocknungsanlagen im Lebensmittelbereich wie der Getreidetrocknung oder der Tierfutterproduktion beschrieben wird, sind andere Anwendungen ebenso denkbar.

Bei solchen Anlagen werden in Abhängigkeit vom jeweiligen Trocknungsgut und der Trocknungsart organische Staubpartikel, gasförmige organische und teilweise sehr geruchsintensive Kohlenstoffverbindungen (VOC: volatile organic carbon - flüchtige organische Kohlenstoffverbindungen), Wasserdampf, anorganische Rauchgasbestandteile und Flugasche ausgetragen. Spezifisch für diese Abluftströme ist deren hoher Wasserdampf-Taupunkt von 45°C bis zu 75°C, welcher auf den hohen Feuchtigkeitsgrad der Abluft zurückzuführen ist.

Zur Abscheidung der genannten Verunreinigungen sind trocken arbeitende Reinigungsanlagen wie Zyklone, Gewebe- oder Schichtbettfilter, und Trockenelektrofilter bekannt. Diese Systeme sind aber zur Abscheidung von Feinstäuben und organischen Bestandteilen unzureichend.

Eine Anlage der gegenständlichen Art ist aus der US 4 781 732 A bekannt, wobei zur Erhöhung des Abreinigungsgrades die Mikroorganismen einen Aktivierungsprozess durchlaufen. Es wird weder die Art der verwendeten Mikroorganismen noch die Betriebstemperatur der als biologischer Filter ausgebildeten Filterstufe erwähnt.

Zur Abscheidung von feinsten Staubpartikeln, kleinsten Flüssigkeitströpfchen- und Partikeln und gasförmigen organischen Bestandteilen wurden nass arbeitende Systeme entwickelt. So beschreibt die EP 358 006 B1 ein Verfahren und eine Anlage zur Reinigung von aus Trocknungsanlagen stammenden Abgasen, welche Anlage aus einem beispielsweise als Zyklon ausgeführten Trockenabscheider mit einer nachgeschaltenen wasch- und Kondensationsvorrichtung zur Vorabscheidung besteht. Anschließend durchströmt das Abgas einen Elektrofilter. Da diese Anlage während der Abreinigung abgeschaltet werden muss, können während dieser Zeit große Mengen Rohgases ungereinigt in die Atmosphäre entweichen. Zudem arbeiten diese Anlagen im Allgemeinen in einem höheren Temperaturbereich von bis zu 75°C, in dem die Abscheideleistungen hinsichtlich gasförmiger organischer Verbindungen mit etwa 20 % beschränkt sind. Dadurch sind auch nur geringe Geruchsminderungsgrade erzielbar.

Eine Weiterentwicklung dieses Verfahren wird in der EP 740 963 A1 beschrieben, wobei durch eine mehrstufige Anordnung der Anlage auch während der Reinigungszyklen ein durchgehender Betrieb gewährleistet wird. Um die Abreinigungswirkung zu verstärken, ist zumindest eine der Filterstufen des Elektrofilters als luftgekühltes Röhrensystem ausgeführt. Dadurch bildet sich an Teilen des Elektrofilters durchgehend Kondenswasser, welches schon während des Betriebes einen großen Teil der Stäube und der organischen Substanzen wegspült. Ein weiteres Erfindungsmerkmal dieser Anlagen ist in der Optik des entweichenden Reingasstromes zu sehen. Weisen herkömmliche Anlagen bei einer Abgastemperatur um 65°C(aufgrund des Wasserdampfgehalten) eine signifikante Abgasfahne auf, so zeigen diese Anlagen keine optisch auffällige Dunstwolke, da dem gereinigten Abgasstrom vor Einmündung in den Abluftkamin noch vorgewärmte, ungesättigte Umgebungsluft beigemengt wird.

Sehr hohe Wirkungsgrade hinsichtlich Staub- und organischer Kohlenstoffverbindungen werden mit thermischen Nachverbrennungsanlagen erreicht, welche allerdings enorme Betriebskosten verursachen.

In der EP 960 648 A1 wird ein Verfahren beschrieben, in welchem das Abgas im ersten Schritt zur Abscheidung von Feststoffen mit einem ersten Waschwasserkreis vorgewaschen wird, und im zweiten Schritt in einer Belebtschlamm-Behandlung als zweitem Waschwasserkreis von organischen Komponenten abgereinigt wird. Kernstück dieser Verfahrenskombination ist eine Temperaturabsenkung nach der ersten Stufe auf unter 50°C. Dadurch ist eine relativ einfache Handhabung des biologischen Abbauprozesses gegeben, da die Mikroorganismen im mesophilen Temperaturbereich (bis etwa 45°C) gegenüber Temperaturschwankungen unempfindlich sind. Nachteile dieses Verfahrens bestehen in den hohen Investkosten und Betriebskosten, da entweder sehr große Kühlluftmengen und damit eine beträchtliche Anlagenvergrößerung notwendig sind, oder zusätzliche Anlagekosten durch erforderliche Wärmetauscher und Kühlttürme entstehen.

Die EP 0 111 302 B1 beschreibt ein Verfahren zur Biofiltration, bei dem ein Biofilter verwendet wird, das üblicherweise aus organischem Trägermaterial, wie z.B. Rindenmulch od. dgl., besteht, und gleichzeitig mit der biologischen Reinigung abgebaut wird. In der Folge wird das Material verbraucht und steht nach bestimmter Zeit nicht mehr zur Reinigung zur Verfügung.

Auch die DE 31 18 455 A1 beschreibt ein Verfahren zur Nassreinigung von mit organischen Substanzen verunreinigter heißer Abluft aus Lackieranlagen, bei dem die zu reinigende Abluft abgekühlt wird und die gebildeten Kondensattröpfchen aus der Abluft abgeschieden werden. Dabei wird ein günstiger Temperaturbereich von 10 bis 35°C für mesophile Mikroorganismen bevorzugt. Auch dabei wird ein Biofilter wie in dem zuletzt genannten Dokument verwendet.

Auch die RU 2 106 184 C zeigt ein zweistufiges Reinigungsverfahren von Abgasen unter Verwendung eines Biofilters im mesophilen Temperaturbereich.

Die Aufgabe der vorliegenden Erfindung besteht darin, eine Anlage der oben angegebenen Art zu schaffen, welche einfacher und kostengünstiger herstellbar ist als herkömmliche Anlagen, und mit der hohe Abreinigungsraten erzielbar sind. Nachteile bekannter Anlagen sollen reduziert bzw. vermieden werden.

Gelöst wird die erfindungsgemäße Aufgabe dadurch, dass Mittel zur Aufrechterhaltung eines konstanten Temperaturniveaus im thermophilen Temperaturbereich von 45°C bis 75°C in der als biologischer Filter ausgebildeten Filterstufe vorgesehen sind, und dass weiters in der Stoffaustauschzone Einbauten zur Immobilisierung der Mikroorganismen vorgesehen sind. Der Schadstoffabbau läuft so ab, dass in einer Filterstufe zur Abscheidung der staubförmigen Inhaltsstoffe sowie Aerosolen, anorganischen Rauchgasbestandteilen sowie organischen Feinstpartikeln, wie Harze, eine Vorabscheidereinheit, z.B. in Form eines Nasselektrofilters oder Sprühwäschers, vorgesehen ist und das Abgas in einer weiteren Filterstufe von den organischen Kohlenstoffkomponenten gereinigt wird. Die biologische Reinigung erfolgt durch sogenannte thermophile Mikroorganismen im Temperaturbereich zwischen 45°C und 75°C. Die Mikroorganismenpopulation nimmt die Schadstoffe in Ihren Stoffwechsel auf. Danach werden die Schadstoffe unter Sauerstoffverbrauch zu unbedenklichen Verbindungen wie Kohlendioxid und Wasserdampf abgebaut. Ein Teil der Schadstoffe wird auch zur Vermehrung der Mikroorganismen verwendet, womit eine Zunahme der im System vorhandenen Mikroorganismen, auch Biomasse genannt, verbunden ist. Der eigentliche Abbauprozess erfolgt bei Temperaturen zwischen 45°C und 75°C, wo nur bestimmte, die sog. thermophilen Mikroorganismen (z.B. Bacillus stearothermophilus, Thermoactinomyces vulgaris), ihr Wachstumsmaximum haben. Die Reinigungsstufen können je nach spezifischen Erfordernissen beispielsweise wie folgt angeordnet werden:
Variante 1: Sprühwäscher - Biowäscher - Nasselektrofilter
Variante 2: Sprühwäscher - Nasselektrofilter - Biowäscher
Variante 3: Sprühwäscher - Nasselektrofilter
Variante 4: Sprühwäscher - Biowäscher
Variante 5: Biowäscher - Nasselektrofilter
Variante 6: Nasselektrofilter - Biowäscher

Der thermophile Temperaturbereich stellt hohe Anforderungen an den eigentlichen Abbauprozess. Um während des Betriebes der biologischen Filterstufe Temperaturspitzen auszugleichen, die Betriebstemperatur der nachfolgenden Filterstufe im optimalen Temperaturbereich zu halten und nur eine geringfügige Schwankungsbreite in der Betriebstemperatur von beispielsweise +/- 2°C zuzulassen, wird die Temperatur erfindungsgemäß in der als biologischer Filter ausgebildeten Filterstufe geregelt. Die Filterstufen können je nach spezifischen Erfordernissen als Sprühwäscher oder Nasselektrofilter und in beliebiger Anordnung, d.h. vor oder nach dem als biologischer Filter ausgebildeten Filterstufe angeordnet sein.

Die Filterstufen enthalten Vorratsbehälter für das Waschwasser, mit dem die Verunreinigungen aus den Abgasen extrahiert werden. Das Waschwasser wird üblicherweise aus dem Vorratsbehälter mittels einer Pumpe in die Abscheideeinheit eingebracht und zusammen mit den Verunreinigungen des Abgases im Kreislauf in den Vorratsbehälter zurückgeführt. Aus dem Vorratsbehälter werden die Verunreinigungen gesondert abgeführt.

Gemäß einem weiteren Merkmal der Erfindung kann ein gemeinsamer Vorratsbehälter für zumindest zwei Filterstufen vorgesehen sein.

Die Mittel zur Aufrechterhaltung des konstanten Temperaturniveaus können durch zumindest eine vorzugsweise mit einem Luftfilter versehene Luftzufuhrleitung zur Zuführung von Umgebungsluft in zumindest einer Filterstufe gebildet sein. Eine derartige Luftkühlung, welche vor oder direkt in die jeweilige Filterstufe erfolgen kann, ist sehr kostengünstig und einfach auszuführen.

Darüber hinaus oder alternativ dazu können die Mittel zur Aufrechterhaltung des konstanten Temperaturniveaus auch durch zumindest einen Wärmetauscher in einem Wasserkreis zumindest einer Filterstufe gebildet sein. Es besteht aber auch die Möglichkeit, direkt in die Abgasverbindungsleitung in zumindest einer Filterstufe einen Wärmetauscher einzubauen.

Gemäß einem weiteren Merkmal der Erfindung sind in der Stoffaustauschzone der als biologischer Filter ausgebildeten Filterstufe Düsen od. dgl. zur feinen Verdüsung von Waschwasser im Abgasstrom vorgesehen. Ebenso können feste Einbauten in Form von sogenannten Wäscherböden od. dgl. vorgesehen sein, um einen hohen Stoffaustausch zu erzielen, oder das Abgas wird über sogenannte Füllkörper, Tropfkörper od. dgl. zur feinen Verteilung der Gas- und Wasserphase geleitet und mit der zirkulierenden Flüssigphase, auch Waschwasser genannt, berieselt. In der Stoffaustauschzone gehen die Schadstoffe der Abluft in die Flüssigphase über.

Die Einbauten in der Stoffaustauschzone können durch Füllkörper, Tropfkörper oder dgl. gebildet sein. In diesen Einbauten in der Stoffaustauschzone sind die Mikroorganismen in der als biologischer Filter ausgebildeten Filterstufe immobilisiert und im Waschwasser suspendiert. Die Mikroorganismen nehmen die in der Waschflüssigkeit gelösten Schadstoffe auf. Damit erfolgt eine Regenerierung bzw. Reinigung des Waschwassers, welches nun wieder Schadstoffe aus der Abluft aufnehmen kann. Zeitlich erfolgt die Regenerierung teilweise bereits in der Stoffaustauschzone sowie teilweise im Vorratsbehälter für das Waschwasser.

Der Vorratsbehälter der als biologischer Filter ausgebildeten Filterstufe, kann als konventionelles Belebtschlammbecken oder auch für höhere spezifische Abbauleistungen mit inerten Füllkörpern oder Tauchkörpern ausgestattet werden, an welchen sich jene Mikroorganismen anhaften, die für den Abbau der aus der Abluft aufgenommenen Schadstoffe verantwortlich sind. Anteilsmäßig kann ein Teil der Mikroorganismen auch auf den Einbauten der Stoffaustauschzone immobilisiert sein und für den Abbau der Schadstoffe verantwortlich sein.

Zur Versorgung der Mikroorganismen im Vorratsbehälter mit Sauerstoff oder Nährstoffen sind Leitungen mit allfälligen Ventilen od. dgl. zur dosierten Zuführung von Sauerstoff und Nährstoffen vorgesehen. Zudem kann eine Leitung für eine mögliche Zudosierung von organisch belastetem Abwasser vorgesehen sein, um die Mikroorganismen in betriebsfreien Zeiten mit Schadstofffracht zu versorgen.

Zur weiteren Erhöhung der Effizienz kann vorgesehen sein, dass das in einer Filterstufe verwendete Waschwasser biologisch gereinigt wird. Dazu wird eine Verbindungsleitung zwischen den Vorratsbehältern zweier Filterstufen angeordnet.

Gemäß einem weiteren Merkmal der Erfindung ist vorgesehen, dass zwischen der Stoffaustauschzone der als biologischer Filter ausgebildeten Filterstufe und dem Vorratsbehälter dieser Filterstufe ein Kreislauf angeordnet ist, in dem kontinuierlich eine definierte Menge Flüssigkeit zirkuliert.

Um die Abwassermengen auf geringstem Niveau zu halten, aber dennoch die sich bildende Biomasse und/oder Feststoffe aus dem System entfernen zu können, ist an dem zumindest einen Vorratsbehälter ein Feststoffabscheider versehen. Dieser Feststoffabscheider kann, wie bei herkömmlichen Kläranlagen, ein übliches Nachklärbecken sein. Es kann aber auch durch Einrichtungen, wie Lamellenklärer oder durch Installation eines Dekanters, eine Austragung an Belebtschlamm erfolgen. Sollte aufgrund hoher Scherkräfte ein vermindertes Absetzverhalten des Belebtschlammes zu beobachten sein, so kann eine Zugabe an Flockungsmittel hier Abhilfe schaffen.

Wenn dem Feststoffabscheider eine Wasseraufbereitungseinheit nachgeschaltet ist, können die gelösten anorganischen Inhaltsstoffe entfernt werden. Diese Wasseraufbereitungseinheit kann beispielsweise in Form einer Umkehrosmose realisiert sein.

Gemäß einem weiteren Merkmal der Erfindung ist vorgesehen, dass beim Anfahren der Reinigungsanlage sowie bei Unterschreitung der Temperatur die Abgase zur Temperaturstabilisierung an zumindest einer Filterstufe vorbeigeleitet werden. Durch eine derartige Maßnahme, welche vorzugsweise durch einen parallel zu der Filterstufe angeordneten Bypass mit entsprechenden Ventilen realisiert wird, kann zum Beispiel beim Anfahren oder Standby-Betrieb der Produktionsanlage und damit verbundenen niedrigen Abgastemperaturen eine Temperaturabsenkung in der biologischen Einheit vermieden werden.

Um insbesondere die als biologischer Filter ausgebildete Filterstufe vor einer Temperaturabsenkung, insbesondere beim Anfahren der Reinigungsanlage sowie bei Unterschreitung der Abgastemperatur, zu schützen, ist der Bypass parallel zur Stoffaustauschzone der als biologischer Filter ausgebildeten Filterstufe angeordnet.

Bevor die von den Schadstoffen gereinigten Abgase an die Atmosphäre abgegeben werden, können aus den Abgasen Flüssigkeitströpfchen beispielsweise über einen Tropfenabscheider abgeschieden werden. In einem derartigen Tropfenabscheider werden die Flüssigkeitströpfchen des nach dem Stoffaustausch feuchten gesättigten Abgases zurückbehalten. Zur Abspülung des Tropfenabscheiders von Feststoffen wird dieser mit einem Reinigungssystem versehen, wobei als Reinigungsmittel entweder Frischwasser oder Waschwasser verwendet werden kann.

Neben der Temperaturregelung ist auch eine Überwachung wichtiger Abwasser-technischer Parameter, wie pH-Wert, elektrische Leitfähigkeit, Sauerstoffgehalt, chemischer Sauerstoff-Bedarf (CSB), biologischer Sauerstoff-Bedarf (BSB, BSB5), Belebtschlammgehalt sowie Gehalt an Phosphat, Nitrat, Nitrit, Ammonium sowie überaus toxische Gifte wie Formaldehyd, welches in vielen Trocknerabgasen enthalten ist, wichtig. Die Überwachung mit entsprechenden Messeinrichtungen kann dabei zu bestimmten Zeitpunkten oder kontinuierlich erfolgen. Um die Mikroorganismen in ausreichender Anzahl am Leben erhalten zu können, ist vorgesehen, dass diese mit Sauerstoff und Nährstoffen versorgt werden. Zur Aufrechterhaltung eines Minimalgehaltes an Gelöstsauerstoff im Waschwasservorratbehälter wird dieser vorzugsweise mit einer kontinuierlichen Begasung versehen. Dies kann zum Beispiel durch Tauchbelüfter oder Membrantellerbelüfter geschehen.

Gemäß einem weiteren Merkmal der Erfindung ist vorgesehen, dass die Verdüsung des Waschwassers in der als Sprühwäscher ausgebildeten Filterstufe durch Einspritzung im Gleich- und/oder Gegenstrom über eine oder mehrere angeordnete Düsenebenen zum Luftstrom erfolgt, welcher in einem horizontal oder vertikal angeordneten Luftkanal strömt.

Anhand der beiliegenden Figuren, welche Blockschaltbilder verschiedener Varianten der vorliegenden Erfindung zeigen, wird die Erfindung näher erläutert. Darin zeigen:
Fig. 1 ein Blockschaltbild einer Ausführungsvariante einer zweistufigen Abgasreinigungsanlage,
Fig. 2 eine Variante einer dreistufigen Reinigungsanlage, die spezifisch zur Behandlung von Abgasströmen mit gasförmigen organischen Schadstoffkomponenten, Staub sowie Aerosole geeignet ist, sowie
Fig. 3 eine Variante einer zweistufigen Reinigungsanlage, die neben den genannten Verunreinigungen zudem gasförmige anorganische Bestandteile aus der Abluft entfernt.

Entsprechend Fig. 1 gelangt das beispielsweise von einer Holzspänetrocknungsanlage stammende Rohgas A in eine erste Filterstufe 1, welche zur Abscheidung der Staubpartikel und Aerosolen sowie anorganischen Inhaltsstoffen dient. Dementsprechend gelangt das Rohgas A in eine Vorabscheidereinheit 30, welche beispielsweise als Nasselektrofilter ausgebildet ist. Derartige Filter eignen sich besonders zur Abscheidung von staubförmigen und aerosolhältigen Schadstoffen und anorganischen Schadstoffen, wie z.B. HCl und SO₂. Zu diesem Zweck wird Wasser aus einem Wasserbehälter 4 mittels einer Pumpe 5 in die Vorabscheidereinheit 30 eingebracht und zusammen mit den Verunreinigungen im Kreislauf in den Wasserbehälter 4 zurückgeführt. Aus diesem Wasserbehälter 4 werden die Feststoffe über einen Feststoffabscheider 6 abgeführt. Das Abwasser wird über eine Leitung 7 entsorgt. Das Rohgas, welches beispielsweise aus der Holzspänetrocknungsanlage stammt, weist auf Grund des hohen Feuchtigkeitsgehalts einen hohen Taupunkt im Bereich von 45°C bis 75°C auf. Daher kann es erforderlich sein, für eine optimale Funktion der biologischen Filterstufe 2 im speziellen zur Glättung von Temperaturspitzen, das im Kreislauf geführte Reinigungswasser, beispielsweise mittels eines Wärmetauschers 8, zu kühlen.

Das von den festen Schadstoffen befreite Rohgas gelangt nun in die zweite Filterstufe 2, in der das Rohgas vor allem von den organischen Schadstoffen befreit wird. Die zweite Filterstufe 2 beinhaltet zunächst eine Stoffaustauschzone 9, in der der Stoffübergang der gasförmigen Inhaltsstoffe vom Abgas zur zirkulierenden Flüssigphase erfolgt. Eine derartige Stoffaustauschzone 9 kann durch Eindüsung von Wasser in den Luftstrom des Rohgases oder über Einbauten, wie Füllkörper, Tropfkörper oder Wäscherböden, in herkömmlich bekannter Art bestehen. Das Waschwasser wird über einen Vorratsbehälter 10 und über entsprechende Leitungen mittels einer Pumpe 11 über die Stoffaustauschzone 9 im Kreislauf geführt. Der Vorratsbehälter 10 kann in Form eines herkömmlichen Belebungsbeckens oder mit integrierten Tauchkörpern ausgeführt sein. Der Abbau der in der Stoffaustauschzone 9 aufgenommenen Schadstoffe erfolgt durch Mikroorganismen. Diese Mikroorganismen können im Waschwasser suspendiert vorliegen (sogenannter Belebtschlamm) und/oder sie können sich auf den Einbauten der Stoffaustauschzone (z.B. auf den Füllkörpern oder Tropfkörpern) festsetzen. Sind im Waschwasser sogenannte Tauchkörper vorhanden, so können sich die Mikroorganismen dementsprechend auch auf diesen Körpern ablagern. Erfindungsgemäß wird die biologische Reinigung im thermophilen Temperaturbereich, d.h. im Bereich von 45°C bis 75°C, durchgeführt. In diesem Temperaturbereich weisen bestimmte thermophile Mikroorganismen Ihr Wachstumsoptimum auf. Um den Temperatur-Schwankungsbereich gering zu halten, wird der zweiten Filterstufe 2 Umgebungsluft über die Leitung 17 allenfalls über einen Ventilator 18 zugeführt. In der Zuführungsleitung 17 kann allenfalls ein Luftfilter (nicht gezeigt) vorgesehen sein. Weitere Möglichkeiten zur Temperaturregelung sowie Ausgleichung von Temperaturspitzen sind der Einbau eines Wärmetauschers 20 in den Waschwasserkreis der zweiten Filterstufe 2 oder eines Wärmetauschers 19 in die Abgasverbindungsleitung zwischen erster Filterstufe 1 und zweiter Filterstufe 2.

Zum Zweck einer optimalen Temperaturregelung werden Parameter, wie pH-Wert, Leitfähigkeit, Sauerstoffgehalt, der Chemische Sauerstoff-Bedarf CSB (jener Sauerstoff, der für eine vollständige Oxidation benötigt wird), weiters der Biologische Sauerstoff-Bedarf BSB (Erfassung des Gehalts an mikrobiell abbaubarem organischem Materials über die Menge Sauerstoff, die zur Veratmung des organischen Materials durch Mikroorganismen notwendig ist) sowie Belebtschlammgehalt und Gehalt an Phosphatnitratnitrit und Ammonium. Weiters ist die Erfassung des Gehalts an toxischen Giften, wie Formaldehyd, im Waschwasser zweckmäßig.

Zur Förderung des Wachstums der Mikroorganismen wird wird der Vorratsbehälter 10 über Leitungen 12, 13 mit Sauerstoff und Nährstoffen versorgt. Der Vorratsbehälter 10 kann auch derart konzipiert sein, dass dieser neben dem biologischen Abbau der Abluftinhaltsstoffe auch einen möglichen Abbau organisch belasteter Abwässer erlaubt. Dazu wird über eine Leitung 14 eine Verbindung zwischen dem Waschwasserkreis des Vorabscheiders 30 als erste Filterstufe 1 und dem Waschwasserkreis der biologischen Reinigungseinheit als zweite Filterstufe 2 geschaffen. Ebenso kann eine weitere Leitung (nicht dargestellt) zum Vorratsbehälter 10 zur Behandlung weiterer betriebsinterner Abwasserströme vorgesehen sein. Somit können z.B. in betriebsfreien Zeiten, in denen keine Abluft anfällt und demnach auch keine Abluftinhaltsstoffe vorliegen, die Mikroorganismen mit Nahrung aufgrund der eingebrachten Abwasserfracht versorgt und ein Absterben der Biomasse vermieden werden. Dies ist speziell bei Wiederinbetriebnahme der die Abgase verursachenden Anlage von Bedeutung, da dadurch sehr rasch eine hohe Abbauaktivität der Mikroorganismen vorliegt und in der Folge eine hohe Reinigungsleistung verzeichnet werden kann. Die in den Stoffwechsel der Mikroorganismen aufgenommenen Schadstoffe werden unter Sauerstoffverbrauch zu unbedenklichen Verbindungen, wie Kohlendioxid und Wasserdampf, abgebaut sowie anteilsmäßig zum Wachstum der Mikroorganismen verwendet. Überschüssige Biomasse kann bei Bedarf ein Feststoffabscheidesystem 15, zum Beispiel in Form eines Nachklärbeckens, Lamellenklärers oder Dekanters ausgetragen werden. Das über das Feststoffabscheidesystem 15 geführte flüssige Medium wird wieder in den Kreislauf zurückgeführt.

Um bei einem kurzzeitigen oder längerfristigen Rückgang der Taupunktstemperatur durch Produktionsunterbrechungen einen Abfall in der Betriebstemperatur der Abreinigungsanlage zu vermeiden, ist gemäß einem weiteren Merkmal der Erfindung ein Bypass 21 vorgesehen, welcher das Abgas um die Stoffaustauschzone 9 leitet. Zu diesem Zweck sind im Bypass 21 und der Leitung in die Stoffaustauschzone 9 entsprechende Ventile 22 und 23 vorgesehen, welche im Bedarfsfall aktiviert werden. Wird das Gas um die Stoffaustauschzone 9 geleitet, wird unter anderem eine Abkühlung der biologischen Filterstufe und somit eine Hemmung der mikrobiologischen Aktivität der thermophilen Mikroorganismen verhindert. Wie bereits erwähnt, kann die Stoffaustauschzone 9 durch einfache Sprühwäscher, die das Waschwasser fein versprühen, so dass die Schadstoffe des Gases ins Wasser übergehen und den im Wasser vorhandenen Mikroorganismen zugeführt werden können, realisiert werden. Darüber hinaus sind Wäscherböden, wo das Waschwasser über kleine Öffnungen in den Wäscherböden versprüht wird, einsetzbar. Auch können sogenannte Füllkörper bzw. Tropfkörper, das sind Strukturkörper, die mit Wasser berieselt werden, angewendet werden. Über die Berieselung können auch die Nährstoffe für die an den Einbauten der Stoffaustauschzone immobilisierten Mikroorganismen zugegeben werden.

Das von den organischen Schadstoffen gereinigte Gas wird vor Abgabe als Reingas B in die Atmosphäre noch über einen Tropfenabscheider 16 geleitet, um feinste Flüssigkeitströpfchen zu entfernen.

Fig. 2 zeigt eine dreistufige Filteranordnung, bei der das Rohgas A in eine erste Filterstufe 1 gelangt, welche als Sprühwäscher ausgeführt ist und zur Abscheidung der Staubpartikel und organischen Inhaltsstoffen dient. Dazu wird aus dem Vorratsbehälter 4 Waschwasser mit Hilfe einer Pumpe 5 in der Sprühzone der Vorabscheidereinheit 30 fein verdüst, wodurch die Abgasinhaltsstoffe zunächst absorbiert werden. Die Verdüsung erfolgt durch Einspritzung im Gleich- und/oder Gegenstrom über eine oder mehrere angeordnete Düsenebene(n) zum Luftström, welcher in einem horizontal oder vertikal angeordneten Luftkanal strömt. Zur Glättung von Temperaturspitzen kann das im Kreislauf geführte Reinigungswasser, beispielsweise mittels eines Wärmetauschers 8, gekühlt werden.

Weitere Möglichkeiten zur Temperaturregelung sowie Ausgleichung von Temperaturspitzen sind der Einbau eines Wärmetauschers 24 in die Rohgaszuleitung zum Vorabscheider 30 oder die Zuführung von Umgebungsluft über eine Leitung 17a und einen Hilfsventilator 18a in die Rohgaszuleitung.

Der Vorratsbehälter 4 kann in Form eines herkömmlichen Belebungsbeckens oder mit integrierten Tauchkörpern ausgeführt sein. Der Abbau der in der ersten Filterstufe 1 aufgenommenen organischen Schadstoffe erfolgt großteils im Vorratsbehälter 4 über eine biologische Reinigung, wo es mit Betriebsfortdauer zu einer Zunahme an Biomasse kommt. Weiters kommt es auch zu einer Zunahme an staubförmigen Bestandteilen, die in der Vorabscheidereinheit 30 aus dem Abgas entfernt werden. Zur Ausschleusung an Biomasse und Staubteilen ist ein Feststoffabscheider 6, z.B. in Form eines Nachklärbeckens, Lamellen-Klärers oder Dekanters, installiert. Bei Bedarf kann dieser Anlage eine Flüssig/Flüssig-Wasseraufbereitungseinheit 26, z.B. in Form einer Umkehrosmose, nachgeschaltet sein.

Zur Förderung des Wachstums der Mikroorganismen wird der Vorratsbehälter 4 über Leitungen 12, 13 mit Sauerstoff und Nährstoffen versorgt. Der Vorratsbehälter 4 kann auch derart konzipiert sein, dass dieser neben dem biologischen Abbau der Abluftinhaltsstoffe auch einen möglichen Abbau organisch belasteter Abwässer über Leitung 27 erlaubt.

Der Abbau der in der Stoffaustauschzone 9 der als biologischer Filter ausgebildeten zweiten Filterstufe 2 aufgenommenen Schadstoffe erfolgt durch Mikroorganismen.

Zur Abscheidung von Feinststäuben und Aerosolen ist erfindungsgemäß zu deren Abscheidung als weiterer Anlagenbestandteil eine dritte als Nasselektrofilter 28 ausgebildete Filterstufe 3 vorgesehen, welche in periodischen Abständen gespült wird, wobei als Spülwasser über die Leitung 29 direkt Wasser aus dem gemeinsamen Vorratsbehälter 4 verwendet wird.

Auch hier kann zwischen der Leitung für das Rohgas A und der Leitung für das Rohgas B ein Bypass 21 vorgesehen sein, welcher das Abgas um die Reinigungsanlage leitet. Zu diesem Zweck sind die Ventile 22 und 23 vorgesehen, welche im Bedarfsfall aktiviert werden.

Fig. 3 zeigt eine weitere zweistufige Anordnung, bei der das Rohgas A in die erste Filterstufe 1, ausgeführt als Vorabscheideeinheit 30, wie z.B. Nasselektrofilter oder Sprühwäscher, geleitet wird. Dazu wird aus dem Vorratsbehälter 4 der ersten Filterstufe 1 in der Vorabscheidereinheit 30 verdüst, wodurch die Abgasinhaltsstoffe zunächst absorbiert werden. Im Vorratsbehälter 4 kommt es mit Betriebsfortdauer zu einer Zunahme an Feststoffen und absorbierten anorganischen Abgasinhaltsstoffen. Zur Ausschleusung dieser Substanzen ist ein Feststoffabscheider 6 installiert. Zur Entfernung der gelösten anorganischen Inhaltsstoffe kann dieser Anlage eine Flüssig/Flüssig Wasseraufbereitungseinheit 26, z.B. in Form einer Umkehrosmose, nachgeschaltet sein.

Das von den festen Schadstoffen und von den gasförmigen anorganischen Inhaltsstoffen befreite Rohgas gelangt nun in die als biologischer Filter ausgebildete zweite Filterstufe 2 beinhaltet zunächst eine Stoffaustauschzone 9, in der der Stoffübergang der gasförmigen organischen Inhaltsstoffe vom Abgas zur zirkulierenden Flüssigphase erfolgt. Eine derartige Stoffaustauschzone 9 kann durch Eindüsung von Wasser in den Luftstrom des Rohgases oder über Einbauten, wie Füllkörper, Tropfkörper oder Wäscherböden, in herkömmlich bekannter Art bestehen. Der Abbau der in der Stoffaustauschzone aufgenommenen Schadstoffe erfolgt durch Mikroorganismen. Diese Mikroorganismen können im Waschwasser suspendiert vorliegen (sogenannter Belebtschlamm) und/oder sie können sich auf den Einbauten der Stoffaustauschzone (z.B. auf den Füllkörpern oder Tropfkörpern) festsetzen. Sind im Waschwasser sogenannte Tauchkörper vorhanden, so können sich die Mikroorganismen dementsprechend auch auf diesen Körpern ablagern. Um den Temperatur-Schwankungsbereich gering zu halten, können auch in dieser Stufe Wärmetauscher 20 eingebaut sein bzw. über eine Leitung 17 und einen Hilfsventilator 18 Frischluft zugeführt werden.

Der Vorratsbehälter 10 der biologischen Stufe kann wiederum in Form eines herkömmlichen Belebungebeckens oder mit integrierten Tauchkörpern ausgeführt sein. Zur Ausschleusung der Biomasse kann ein eigener Feststoffabscheider 15 installiert sein. Es kann aber auch ein Teilstrom vom Vorratsbehälter 10 über die Leitung 14 zum Festoffabscheider 6 der ersten Filterstufe 1 zugeführt werden. Ebenso kann über eine weitere Leitung 31 eine Verbindung vom Vorratsbehälter 4 der ersten Filterstufe 1 zum Vorratsbehälter 10 der zweiten Filterstufe 2 angeordnet sein.

Zur Förderung des Wachstums der Mikroorganismen wird der Vorratsbehälter 10 über Leitungen 12, 13 mit Sauerstoff und Nährstoffen versorgt. Der Vorratsbehälter 10 kann auch derart konzipiert sein, dass dieser neben dem biologischen Abbau der Abluftinhaltsstoffe auch einen möglichen Abbau organisch belasteter Abwässer über Leitung 27 sowie über die Leitung 29 auch, eine biologische Behandlung des Waschwassers der ersten Filterstufe 1 erlaubt.

Um bei einem kurzzeitigen oder längerfristigen Rückgang der Taupunktstemperatur durch Produktionsunterbrechungen einen Abfall in der Betriebstemperatur der Abreinigungsanlage zu vermeiden, kann ein Bypass 21 vorgesehen sein, der im Bedarfsfall über die Ventile 22 und 23 aktiviert werden kann.

Mit Hilfe des erfindungsgemäßen Verfahrens können optimale Abreinigungsverhältnisse geschaffen werden. Darüber hinaus sind kostengünstigere und einfachere Abreinigungsanlagen erforderlich, da keine oder nur eine geringe Kühlung der Abgase erforderlich ist und somit die üblicherweise enormen Mengen an Kühlwasser und enorm aufwendigen Kühltürme vermieden werden.

## Patentansprüche

1. Anlage zur Reinigung von mit Staub, mit Aerosolen und mit flüchtigen organischen Kohlenstoffverbindungen belasteten Abgasen, insbesondere Abgasen von Trocknungsanlagen für biogene Rohstoffe, mit zumindest zwei hintereinander angeordneten Filterstufen (1, 2, 3) umfassend zumindest eine als Sprühwäscher oder Nasselektrofilter unter Verwendung von Waschwasser ausgebildete Filterstufe (1) zur Reinigung der Abgase von partikelförmigen und aerosolhältigen Inhaltsstoffen und zumindest einer Filterstufe (2) zur Reinigung der Abgase von organischen Verbindungen, Aerosolen sowie weiteren geruchsintensiven Substanzen mittels Mikroorganismen, welche Filterstufe (2) als biologischer Filter ausgeführt ist, mit einer Stoffaustauschzone (9), in welcher durch Verdüsung von Waschwasser der Übergang der Abgase von der Gasphase in die Flüssigphase erfolgt, **dadurch gekennzeichnet, dass** Mittel zur Aufrechterhaltung eines konstanten Temperaturniveaus im thermophilen Temperaturbereich von 45°C bis 75°C in der als biologischer Filter ausgebildeten Filterstufe (2) vorgesehen sind und dass weitere in der Stoffaustauschzone (9) Einbauten zur Immobilisierung der Mikroorganismen vorgesehen sind.

2. Anlage nach Anspruch 1, **dadurch gekennzeichnet, dass** die Filterstufen (1, 2, 3) Vorratsbehälter (4, 10) für das Waschwasser enthalten.

3. Anlage nach Anspruch 2, **dadurch gekennzeichnet, dass** ein gemeinsamer Vorratsbehälter (4) für zumindest zwei Filterstufen (1, 2, 3) vorgesehen ist.

4. Anlage nach einem der Ansprüche 1 bis 3, **dadurch gekennzeichnet, dass** die Mittel zur Aufrechterhaltung des konstanten Temperaturniveaus durch zumindest eine vorzugsweise mit einem Luftfilter versehene Luftzufuhrleitung (17, 17a) zur Zuführung von Umgebungsluft in zumindest einer Filterstufe (1, 2, 3) gebildet sind.

5. Anlage nach einem der Ansprüche 1 bis 4, **dadurch gekennzeichnet, dass** die Mittel zur Aufrechterhaltung des konstanten Temperaturniveaus durch zumindest einen Wärmetauscher (8, 20) in einem Wasserkreis zumindest einer Filterstufe (1, 2, 3) gebildet sind.

6. Anlage nach einem der Ansprüche 1 bis 5, **dadurch gekennzeichnet, dass**. die Mittel zur Aufrechterhaltung des konstanten Temperaturniveaus durch zumindest einen Wärmetauscher (19, 24) in einer Leitung der Abgase in zumindest einer Filterstufe (1, 2, 3) gebildet sind.

7. Anlage nach einem der Ansprüche 1 bis 6, **dadurch gekennzeichnet, dass** in der Stoffaustauschzone (9) der als biologischer Filter ausgebildeten Filterstufe (2) Düsen oder dergl. zur feinen Verdüsung von Waschwasser im Abgasstrom, Wäscherböden oder dergl. zur feinen Verteilung des Gas- und Wasserstroms oder Füllkörper, Tropfkörper oder dergl. zur feinen Verteilung der Gas- und Wasserphase vorgesehen sind.

8. Anlage nach einem der Ansprüche 1 bis 7, **dadurch gekennzeichnet, dass** die Einbauten in der Stoffaustauschzone (9) durch Füllkörper, Tropfkörper oder dergl. gebildet sind.

9. Anlage nach einem der Ansprüche 1 bis 8, **dadurch gekennzeichnet, dass** der Vorratsbehälter (4, 10) der als biologischer Filter ausgebildeten Filterstufe (2) als Belebtschlammbecken ausgebildet ist.

10. Anlage nach Anspruch 9, **dadurch gekennzeichnet, dass** der Vorratsbehälter (4, 10) Füllkörper oder Tauchkörper beinhaltet.

11. Anlage nach Anspruch 9 oder 10, **dadurch gekennzeichnet, dass** der Vorratsbehälter (4, 10) Leitungen (12, 13, 14) zur dosierten Zuführung von Sauerstoff, Nährstoffen oder organisch belasteten Abwässern aufweist.

12. Anlage nach einem der Ansprüche 1 bis 11, **dadurch gekennzeichnet, dass** zwischen den Vorratsbehältern (4, 10) zweier Filterstufen (1, 2, 3) eine Verbindungsleitung (14) angeordnet ist.

13. Anlage nach einem der Ansprüche 1 bis 12, **dadurch gekennzeichnet, dass** zwischen der Stoffaustauschzone (9) der als biologischer Filter ausgebildeten Filterstufe (2) und dem Vorratsbehälter (10) dieser Filterstufe (2) ein Kreislauf angeordnet ist.

14. Anlage nach einem der Ansprüche 1 bis 13, **dadurch gekennzeichnet, dass** an dem zumindest einen Vorratsbehälter (4, 10) ein Feststoffabscheider (6, 15) zum Austragen von überschüssiger Biomasse und/oder Feststoffen vorgesehen ist.

15. Anlage nach Anspruch 14, **dadurch gekennzeichnet, dass** dem Feststoffabscheider (6, 15) eine Wasseraufbereitungseinheit (26) nachgeschaltet ist.

16. Anlage nach einem der Ansprüche 1 bis 15, **dadurch gekennzeichnet, dass** parallel zu zumindest einer Filterstufe (1, 2, 3) ein Bypass (21) mit zumindest einem Ventil (23) vorgesehen ist.

17. Anlage nach Anspruch 16, **dadurch gekennzeichnet, dass** der Bypass (21) parallel zur Stoffaustauschzone (9) der als,biologischer Filter ausgebildeten Filterstufe (2) angeordnet ist.

18. Anlage nach einem der Ansprüche 1 bis 17, **dadurch gekennzeichnet, dass** in der Leitung für die gereinigten Abgase zumindest ein Tropfenabscheider (16) zur Abscheidung feinster Flüssigkeitströpfchen angeordnet ist.

19. Anlage nach einem der Ansprüche 1 bis 18, **dadurch gekennzeichnet, dass** im Waschkreislauf zumindest einer Filterstufe (1, 2, 3) Messeinrichtungen für Parameter wie pH-Wert, elektrische Leitfähigkeit, Sauerstoffgehalt, chemischer Sauerstoff-Bedarf, biologischer Sauerstoff-Bedarf, Belebtachlammgehalt sowie Gehalt an Phosphat, Nitrat, Nitrit, Ammonium, Formaldehyd, etc. vorgesehen sind.

20. Anlage nach einem der Ansprüche 1 bis 19, **dadurch gekennzeichnet, dass** die Verdüsung des Waschwassers in der als Sprühwäscher ausgebildeten Filterstufe (1) durch Einspritzung im Gleich- und/oder Gegenstrom über eine oder mehrere angeordnete Düsenebenen zum Luftstrom erfolgt, welcher in einem horizontal oder vertikal angeordneten Luftkanal strömt.

## Claims

1. A system for purifying waste gases loaded with dust, aerosols and with volatile organic carbon compounds, in particular waste-gases from drying systems for biogenic crude materials, comprising at least two successively arranged filter stages (1, 2, 3) including at least one filter stage (1) designed as a spray scrubber or wet electric filter using wash water, for purifying the waste-gases from particulate and aerosol-containing ingredients, and at least one filter stage (2) for purifying the waste gases from organic compounds, aerosols as well as further odor-intensive substances by means of microorganisms, which filter stage (2) is designed as a biological filter, with a mass transfer zone (9) in which the transfer of the waste gases from the gaseous phase into the liquid phase occurs by the atomisation of wash water, **characterised in that** means for maintaining a constant temperature level in the thermophilic temperature range of from 45°C to 75°C are provided in the filter stage (2) that is designed as a biological filter, and that furthermore installations for immobilising the microorganisms are provided in the mass transfer zone (9).

2. A system according to claim 1, **characterised in that** the filter stages (1, 2, 3) comprise reservoirs (4, 10) for the wash water.

3. A system according to claim 2, **characterised in that** a common reservoir (4) is provided for at least two filter stages (1, 2, 3).

4. A system according to any one of claims 1 to 3, **characterised in that** the means for maintaining the constant temperature level are formed by at least one, preferably air-filter-provided, air supply duct (17, 17a) for supplying ambient air in at least one filter stage (1, 2, 3).

5. A system according to any one of claims 1 to 4, **characterised in that** the means for maintaining the constant temperature level are formed by at least one heat exchanger (8, 20) in a water circulation of at least one filter stage (1, 2, 3).

6. A system according to any one of claims 1 to 5, **characterised in that** the means for maintaining the constant temperature level are formed by at least one heat exchanger (19, 24) in a duct of the waste gases in at least one filter stage (1, 2, 3).

7. A system according to any one of claims 1 to 6, **characterised in that** in the mass transfer zone (9) of the filter stage (2) that is designed as a biological filter, nozzles or the like are provided for atomising wash water in the waste gas flow, scrubber bottoms or the like are provided for the fine distribution of the gas and water flow, or tower packings, drippers or the like are provided for the fine distribution of the gas and water phases.

8. A system according to any one of claims 1 to 7, **characterised in that** the installations in the mass transfer zone (9) are formed by tower packings, drippers or the like.

9. A system according to any one of claims 1 to 8, **characterised in that** the reservoir (4, 10) of the filter stage (2) designed as a biological filter is designed as an activated sludge basin.

10. A system according to claim 9, **characterised in that** the reservoir (4, 10) includes tower packings or immersion bodies.

11. A system according to claim 9 or 10, **characterised in that** the reservoir (4, 10) comprises ducts (12, 13, 14) for the metered supply of oxygen, nutrients or organically loaded waste waters.

12. A system according to any one of claims 1 to 11, **characterised in that** a connecting duct (14) is arranged between the reservoirs (4, 10) of two filter stages (1, 2, 3).

13. A system according to any one of claims 1 to 12, **characterised in that** a circulation is arranged between the mass transfer zone (9) of the filter stage (2) that is designed as a biological filter, and the reservoir (10) of that filter stage (2).

14. A system according to any one of claims 1 to 13, **characterised in that** a solids separator (6, 15) is provided on the at least one reservoir (4, 10) for discharging an excess of biomass and/or solids.

15. A system according to claim 14, **characterised in that** a water treatment unit (26) is arranged to follow the solids separator (6, 15).

16. A system according to any one of claims 1 to 15, **characterised in that** a bypass (21) comprising at least one valve (23) is provided in parallel to at least one filter stage (1, 2, 3).

17. A system according to claim 16, **characterised in that** the bypass (21) is arranged in parallel to the mass transfer zone (9) of the filter stage (2) that is designed as a biological filter.

18. A system according to any one of claims 1 to 17, **characterised in that** at least one droplet separator (16) is arranged in the duct for the purified waste-gases for separating finest liquid droplets.

19. A system according to any one of claims 1 to 18, **characterised in that** measuring devices for parameters such as pH, electric conductivity, oxygen content, chemical oxygen demand, biological oxygen demand, activated sludge content as well as the contents of phosphate, nitrate, nitrite, ammonium, formaldehyde etc. are arranged in the washing circulation of at least one filter stage (1, 2, 3).

20. A system according to any one of claims 1 to 19, **characterised in that** the atomisation of the wash water in the filter stage (1) designed as a spray scrubber is effected by injection via one or several nozzle levels arranged in co-current with and/or counter-current to the air flow which flows in a horizontally or vertically arranged air channel.

## Revendications

1. Installation d'épuration de rejets gazeux chargés en poussière, en aérosols et en composés organiques volatiles du carbone, en particulier de rejets gazeux d'installations de séchage pour des matières premières biotiques, avec au moins deux étages de filtration (1, 2, 3) disposés l'un derrière l'autre, comprenant au moins un étage de filtration (1) réalisé en utilisant de l'eau de lavage, comme colonne de lavage par pulvérisation ou comme électrofiltre humide pour l'épuration des rejets gazeux de constituants en forme de particules et contenant des aérosols et au moins un étage de filtration (2) pour l'épuration des rejets gazeux de composés organiques, d'aérosols et d'autres substances intensivement odorantes, au moyen de micro-organismes, lequel étage de filtration (2) est réalisé comme filtre biologique, avec une zone d'échange de matière (9) dans laquelle le transfert des rejets gazeux de la phase gazeuse dans la phase liquide s'effectue par pulvérisation d'eau de lavage depuis une buse, **caractérisé en ce que** des moyens pour le maintien d'un niveau de température constant dans le domaine de température thermophile de 45 °C à 75 °C, sont prévus dans l'étage de filtration (2) réalisé comme filtre biologique et **en ce qu'**en outre des chicanes sont prévues dans la zone d'échange de matière (9) pour l'immobilisation des micro-organismes.

2. Installation selon la revendication 1, **caractérisée en ce que** les étages de filtration (1, 2, 3) contiennent des réservoirs (4, 10) pour l'eau de lavage.

3. Installation selon la revendication 2, **caractérisée en ce qu'**un réservoir (4) commun est prévu pour au moins deux étages de filtration (1, 2, 3).

4. Installation selon l'une quelconque des revendications 1 à 3, **caractérisée en ce que** les moyens pour la conservation du niveau constant de température sont formés par au moins une conduite d'amenée d'air (17, 17a) dotée de préférence d'un filtre d'air pour l'amenée d'air environnant dans au moins un étage de filtration (1, 2, 3).

5. Installation selon l'une quelconque des revendications 1 à 4, **caractérisée en ce que** les moyens pour la conservation du niveau constant de température sont formés par au moins un échangeur de chaleur (8, 20) dans un circuit d'eau d'au moins un étage de filtration (1, 2, 3).

6. Installation selon l'une quelconque des revendications 1 à 5, **caractérisée en ce que** les moyens pour la conservation du niveau constant de température sont formés par au moins un échangeur de chaleur (19, 24) dans une conduite des rejets gazeux d'au moins un étage de filtration (1, 2, 3).

7. Installation selon l'une quelconque des revendications 1 à 6, **caractérisée en ce que**, dans la zone d'échange de matière (9) de l'étage de filtration (2) réalisé comme filtre biologique, sont prévus des buses ou similaires pour la pulvérisation fine d'eau de lavage dans le courant de rejets gazeux, des plateaux de lavage ou similaires pour la distribution fine courant de gaz et d'eau ou des corps de remplissage, des corps de percolation ou similaires pour la distribution fine des phases de gaz et d'eau.

8. Installation selon l'une quelconque des revendications 1 à 7, **caractérisée en ce que** les chicanes dans la zone d'échange de matière (9) sont formées par des corps de remplissage, des corps de percolation ou similaires.

9. Installation selon l'une quelconque des revendications 1 à 8, **caractérisée en ce que** le réservoir (4, 10) de l'étage de filtration (2) réalisé comme filtre biologique est configuré comme bassin de boues activées.

10. Installation selon la revendication 9, **caractérisée en ce que** le réservoir (4, 10) contient des corps de remplissage ou des corps immergés.

11. Installation selon la revendication 9 ou 10, **caractérisée en ce que** le réservoir (4, 10) comporte des conduites (12, 13, 14) pour l'introduction dosée d'oxygène, de nutriments ou d'eaux usées chargées organiquement.

12. Installation selon l'une des revendications 1 à 11, **caractérisée en ce qu'**une conduite de liaison (14) est disposée entre les réservoirs (4, 10) de deux étages de filtration (1, 2, 3).

13. Installation selon l'une des revendications 1 à 12, **caractérisée en ce qu'**entre la zone d'échange de matière (9) de l'étage de filtration (2) réalisé comme filtre biologique et le réservoir (10) de cet étage de filtration (2), est disposé un circuit.

14. Installation selon l'une des revendications 1 à 13, **caractérisée en ce que** sur le au moins un réservoir (4, 10), est prévu un séparateur de matières solides (6, 15) pour l'extraction de biomasse et / ou de matières solides en excédent.

15. Installation selon la revendication 14, **caractérisée en ce qu'**une unité de traitement de l'eau (26) est installée en aval du séparateur de matières solide (6, 15).

16. Installation selon l'une des revendications 1 à 15, **caractérisée en ce qu'**en parallèle à au moins un étage de filtration (1, 2, 3) est prévue une dérivation (21) avec au moins une valve (23).

17. Installation selon la revendication 16, **caractérisée en ce que** la dérivation (21) est disposée en parallèle à la zone d'échange de matière (9) de l'étage de filtration (2) réalisé comme filtre biologique.

18. Installation selon l'une des revendications 1 à 17, **caractérisée en ce qu'**au moins un séparateur de gouttes (16) est disposé dans la conduite pour les rejets gazeux épurés, pour la séparation des gouttes de liquide les plus fines.

19. Installation selon l'une des revendications 1 à 18, **caractérisée en ce que**, dans le circuit de lavage d'au moins un étage de filtration (1, 2, 3), sont prévus des dispositifs de mesure pour des paramètres tels que le pH, la conductibilité électrique, la teneur en oxygène, la demande chimique d'oxygène, la demande biologique d'oxygène, la teneur en boues activées ainsi que les teneurs en phosphate, nitrate, nitrite, ammonium, forinaldéhyde etc.

20. Installation selon l'une quelconque des revendications 1 à 19, **caractérisée en ce que** la pulvérisation par buses de l'eau de lavage dans l'étage de filtration (1) réalisé comme laveur à pulvérisation s'effectue par injection dans un ou plusieurs plans de buses disposés, à co-courant et / ou à contre-courant par rapport au courant d'air, lequel s'écoule dans une canalisation d'air disposée horizontalement ou verticalement.
